# EUROPÄISCHE PATENTSCHRIFT

(11) **EP 1 191 731 B1**
(45) Veröffentlichungstag und Bekanntmachung des Hinweises auf die Patenterteilung: **05.08.2009**
(21) Anmeldenummer: 01120942.6
(22) Anmeldetag: 31.08.2001
(51) Int. Cl.: H04L 1/00, H04L 12/413

(54) **Verfahren und Vorrichtung zur störsicheren Übertragung von Daten in einem Bus**
Method and apparatus for interference-resistant data transmission on a bus
Procédé et dispositif de transmission de données résistant aux perturbations sur un bus

(30) Priorität: 20.09.2000 DE 10046664
(43) Veröffentlichungstag der Anmeldung: 27.03.2002
(73) Patentinhaber: ROBERT BOSCH GMBH, 70442 Stuttgart (DE)
(72) Erfinder: Van Wickeren, Thomas, 71665 Vaihingen/Enz (DE); Arlt, Andreas, 70499 Stuttgart (DE); Gscheidle, Wolfgang, 71720 Oberstenfeld (DE)

(56) Entgegenhaltungen:
- US-A- 4 063 220
- US-A- 4 259 663
- US-A- 5 636 343

## Beschreibung

### Stand der Technik

Die vorliegende Erfindung betrifft ein Verfahren und eine Vorrichtung zur störsicheren Übertragung von Daten zwischen Steuergeräten in einem optischen Bus, insbesondere einem CAN-Bus, einem PROFIBUS, einem TTP/C-Bus oder einem I2C-Bus nach den Oberbegriffen der unabhängigen Ansprüche.

Insbesondere bei Kraftfahrzeugen ist ein immer stärkerer Einsatz von Steuerungs- und Regelungstechnik zu verzeichnen, zum Beispiel gibt es aufwendige Motor- und Getriebesteuerungen, Antiblockiersysteme, Antriebsschlupfregelungen und umfassende Regelungen der Fahrdynamik, usw. Diese Entwicklung erfordert den Einsatz leistungsfähiger Bussysteme, wie CAN, PROFIBUS, I2C, TTP/C, usw, welche einen regen Datenaustausch zwischen den einzelnen Komponenten auch unter Echtzeitbedingungen erlauben.

Zu diesem Zweck wurde wie erwähnt u.a. das Controller Area Network (CAN) entwickelt, anhand dessen die vorliegende Erfindung im folgenden beispielhaft erläutert wird.

Das CAN arbeitet mit einem Buszugriff nach Bedarf und verwendet dabei das CSMA/CA- Verfahren. CSMA steht hierbei für Carrier Sense Multiple Access, CA steht für Collision Avoidance. Bei diesem Zugriffsverfahren können alle Stationen nach Bedarf auf den Bus zugreifen. Wenn eine Station senden will, hört sie den Bus ab. Sobald dieser frei ist, beginnt die betreffende Station zu senden.

Dabei taucht jedoch das Problem auf, daß möglicherweise zwei Stationen zur selben Zeit auf den Bus zugreifen. Es wird dadurch gelöst, daß eine sendende Station durch Abhören des Busses feststellen kann, ob ihr Telegramm durch ein anderes verdrängt wird.

Das im CAN-Bus eingesetzte CSMA/CA-Verfahren arbeitet folgendermaßen:

Die im Prinzip nach RS 485 ausgelegte physikalische Ankopplung ist derart modifiziert, daß ein Zustand, zum Beispiel binär 0, dominant ist. Das heißt, wenn eine binäre 0 von einem Sender und eine binäre 1 von einem anderen Sender auf dem Bus zusammentreffen, setzt sich die dominante 0 gegenüber der rezessiven 1 durch.

Wenn zwei Stationen zur selben Zeit erkennen, daß der Bus frei ist, geben sie nacheinander die Bits ihres Telegramms auf den Bus. Zunächst sendet jede Station ein Startbit. Dieses ist immer dominant. Anschließend werden die Adreßinformationen gesendet. Wenn innerhalb der Adreßbits, welche mit dem höchstwertigen Bit beginnend gesendet werden, eine 0 und eine 1 aufeinandertreffen, setzt sich die dominante 0 durch. Da beide Stationen auch gleichzeitig den Bus abhören, stellt die "unterlegene" Station fest, daß ihre gesendete 1 in eine 0 abgeändert wurde und bricht daraufhin die Übertragung ab. Danach hört diese weiterhin den Bus ab und wartet, bis dieser wieder frei ist, um erneut ihr Telegramm abzusenden.

Ein Telegramm wird somit um so sicherer übertragen, je niederwertiger die Adresse ist. Höchste Priorität hat somit die niederwertigste Adresse.

Beim CAN-Bus werden jedoch mit den Adressen nicht einzelne Stationen, sondern einzelne Objekte bzw. Dateninhalte der Telegramme gekennzeichnet. Die Objekte können so je nach Wichtigkeit mit Prioritäten versehen werden.

Bekannt ist es, CAN-Verbindungen über verdrillte Kupferleitungen zu realisieren. Ein CAN-Steuergerät bzw. CAN-Controller ist über die Tx/Rx Leitungen mit einer physikalischen Schicht (physical layer) verbunden, welche die Schnittstelle zum CAN-Bus darstellt.

Um die Anforderungen an die elektromagnetische Verträglichkeit (EMV) zu erfüllen und somit eine ausreichende Störsicherheit zu gewährleisten, werden unterschiedliche Beschaltungsvarianten des physical layer eingesetzt. Eine ausreichende Störsicherheit ist auf diese Weise nicht in allen Fällen zu erreichen.

Eine weitere Möglichkeit einen störsicheren Bus zu realisieren ergibt sich bei der Verwendung eines rein optischen Busses. Die Verwendung eines Lichtwellenleiters in einem CAN-Bus ist beispielsweise aus der DE 35 46 664 C3 bekannt. Bei der beschriebenen Ausführung wird jedoch ein zusätzliches Bauelement, nämlich ein Koppelelement oder ein optischer Spleiß, benötigt. Eine solche Implementierung erweist sich daher als aufwendig und teuer.

Das Patent US5636343 offenbart ein Verfahren zur störsicheren Übertragung von Daten über einen Bus, bei dem ein Sendesignal auf den Bus gegeben wird und ein Empangssignal empfangen wird. Eine logische Verknüpfung des Signals Tx mit dem aktuellen Bussignal wird benutzt um zu erkennen, ob das Sendesignal mit einem anderen Signal kollidiert.

### Vorteile der Erfindung

Aufgabe der vorliegenden Erfindung ist es, ein Verfahren und eine Vorrichtung zur störsicheren Übertragung von Daten zwischen Steuergeräten in einem optischen Bus, insbesondere CAN, gemäß den Oberbegriffen der unabhängigen Ansprüche vorzuschlagen, welche im Vergleich zu bekannten Verfahren und Vorrichtungen weniger aufwendig und daher kostengünstiger realisierbar und leichter einsetzbar ist.

Die das Verfahren und die Vorrichtung betreffende Aufgabe wird durch ein Verfahren und eine Vorrichtung gemäß den unabhängigen Ansprüchen gelöst.

Vorteilhafte Ausgestaltungen der Erfindung ergeben sich aus der Beschreibung und den Unteransprüchen.

Bei der Erfindung wird beispielhaft von einem Verfahren zur störsicheren Übertragung von Daten zwischen Steuergeräten in einem CAN-Bus ausgegangen. Jedes Steuergerät ist dabei einem Busteilnehmer zugeordnet bzw. stellt einen Teilnehmer dar und kann ein Signal Tx auf den Bus geben. Das Signal Tx stellt ein eine Information tragendes Signal von einem Teilnehmer dar. Bevor das Signal auf den Bus gesendet wird und während der Übertragung empfängt das Steuergerät ein dem Bussignal zuordnenbares Signal Rx. Kern der Erfindung ist es, daß das Signal Rx sich aus der logischen Verknüpfung des Signals Tx mit dem Bussignal ergibt.

Bei der logischen Verknüpfung handelt es sich vorteilhafterweise um eine ODER-Verknüpfung.

Auf diese Weise kann das Steuergerät während der Übertragung der Daten auf dem Bus, insbesondere CAN-Bus, überprüfen, ob ein anderes Steuergerät zur gleichen Zeit ein Telegramm mit höherer Priorität auf den Bus gibt.

Für diese Funktion wird vorteilhafterweise vereinbart, dass der dominante Pegel des CAN-Busses dem elektrischen Zustand "low" und dem optischen Zustand "an" entspricht.

Bei dem erfindungsgemäßen Verfahren ist vorteilhafterweise die Verwendung eines zusätzlichen Koppelelements oder eines optischen Spleißes nicht mehr notwendig. Weiterhin ist es möglich, ein kostengünstiges unidirektionales Standard-LWL-Kabel einzusetzen. Aufgrund dessen kann der CAN-Bus preisgünstig realisiert und leicht eingesetzt werden. Die Verwendung eines Lichtwellenleiters bewirkt die Unempfindlichkeit der Übertragungsstrecke gegen elektromagnetische Beeinflussung (EMV).

Von Vorteil ist es, wenn das Signal Tx, welches auf den Bus gegeben wird, und das Bussignal, welches vom Steuergerät eingelesen wird, verstärkt werden. Dies erhöht die Betriebssicherheit.

Wird mit negierten Signalen gearbeitet, kann die logische Verknüpfung ODER nach DeMorgan mit einem UND-Gatter realisiert werden. Ebenso sind weitere Verknüpfungsmöglichkeiten bzw. logische Verknüpfungen entsprechend einsetzbar.

Die erfindungsgemäße Vorrichtung zur störsicheren Übertragung von Daten in einem optischen CAN-Bus weist ein Steuergerät auf, welches ein Signal Tx ausgibt und ein Signal Rx empfängt, einen elektrooptischen Wandler, welcher das elektrische Signal Tx in ein optisches Signal umwandelt, und einen optoelektrischer Wandler, welcher das optische Bussignal in ein elektrisches Signal umwandelt. Die Vorrichtung zeichnet sich dadurch aus, daß ein Mittel vorgesehen ist, welches ein erstes Eingangssignal und als zweites Signal das umgewandelte Bussignal einliest und die logische Verknüpfung ODER des Bussignals und des ersten Eingangssignals als Signal Rx ausgibt.

Mit einem zusätzlichen Schalter kann das erste Signal gewählt werden.

Wird als das erstes Signal das Signal Tx gewählt, kann auf diese Weise das Steuergerät überprüfen, ob das von ihm auf den Bus gegebene Telegramm von einem prioritätshöheren Telegramm verdrängt wurde.

Wird als erstes Signal ein konstantes Signal, beispielsweise das Ausgangssignal einer separaten Energiequelle, eingegeben, kann die Vorrichtung zur Überwachung und Steuerung einer konventionellen CAN-Übertragung eingesetzt werden.

### Zeichnungen

Die Erfindung wird anhand der beigefügten zwei Zeichnungen näher erläutert.

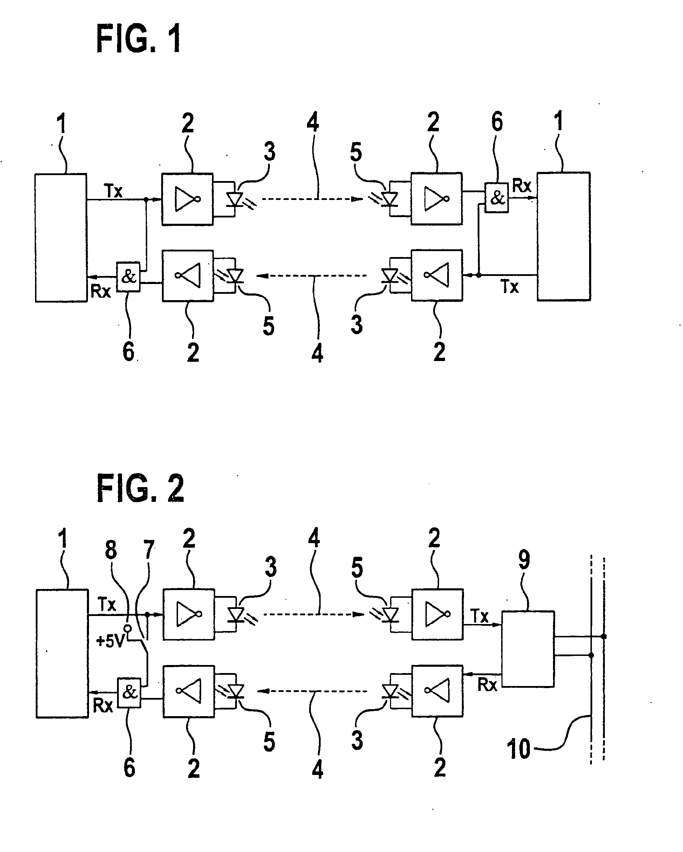

Dabei zeigt Figur 1 einen Bus, beispielhaft einen CAN-Bus, mit zwei Teilnehmern in schematischer Darstellung.

Figur 2 offenbart eine weitere Einsatzmöglichkeit des erfindungsgemäßen Verfahrens bzw. der erfindungsgemäßen Vorrichtung.

### Beschreibung der Ausführungsbeispiele

Figur 1 zeigt einen CAN-Bus mit zwei Teilnehmern in schematischer Darstellung. Jedem Teilnehmer ist ein Steuergerät 1 zugeordnet. Jedes Steuergerät 1 empfängt ein Signal Rx und gibt ein Signal Tx aus. Das Signal Tx wird zunächst in einem Verstärker 2 verstärkt und negiert. Anschließend wird das verstärkte Signal in einem elektrooptischen Wandler 3, beispielsweise einer LED, in ein optisches Signal umgewandelt. Das optische Signal wird mittels eines Lichtwellenleiters 4 übertragen.

Jedem Steuergerät 1 ist ein optoelektrischer Wandler 5, beispielsweise eine Photodiode oder ein Phototransistor, zugeordnet. Dieser Wandler 5 wandelt die optischen Signale auf dem Lichtwellenleiter 4 in elektrische Signale um, die anschließend im Verstärker 2 verstärkt und negiert werden. Das umgewandelte Bussignal und das Signal Tx sind Eingangsgrößen eines UND Gatters 6. Das UND Gatter 6 bewirkt aufgrund der negierten Eingangssignale die Veroderung dieser und gibt die logische Verknüpfung der Eingangssignale als Signal Rx aus. Das Signal Rx wird vom Steuergerät 1 ausgewertet. So wird festgestellt, ob ein prioritätshöheres Signal auf dem Bus das vom betreffenden Steuergerät 1 abgegebene Signal verdrängt. In diesem Fall wird die Übertragung abgebrochen bzw. das prioritätshöhere Signal eingelesen.

In Figur 2 ist eine weitere Einsatzmöglichkeit der erfindungsgemäßen Vorrichtung dargestellt. Die Vorrichtung dient in diesem Fall zur Überwachung und Steuerung einer konventionellen CAN-Übertragung in gestörter Umgebung. Hierzu ist ein zusätzlicher Schalter 7 vorgesehen, der ein Umschalten vom Signal Tx auf eine separate Energiequelle 8, beispielsweise einen Akku, ermöglicht.

Der überwachte Teilnehmer weist eine physikalische Schicht 9 auf, die das vom Lichtwellenleiter 4 empfangene und umgewandelte Signal Tx auf den CAN-Bus 10 überträgt und das Signal Rx über den Verstärker 2 und den elektrooptischen Wandler 3 auf den Lichtwellenleiter 4 gibt.

Es sei angemerkt, daß das dargestellte Verfahren insbesondere für eine Eins-zu-Eins-Verbindung besonders vorteilhaft funktioniert. Es sei daher darauf hingewiesen, daß mittels des eingesetzten Busses beispielhaft eine Eins-zu-Eins-Verbindung zwischen zwei Controllern, insbesondere CAN-Controllern, über Lichtwellenleiter dargestellt ist.

## Patentansprüche

1. Verfahren zur störsicheren Übertragung von Daten zwischen Steuergeräten in einem optischen Bus, bei dem ein Steuergerät ein eine Steuergeräteinformation tragendes Signal Tx auf den Bus gibt und ein einem aktuellen Bussignal zuordenbares Signal Rx empfängt, **dadurch gekennzeichnet, daß** das während der Übertragung über den Bus empfangene Signal Rx einer logischen Verknüpfung des Signals Tx mit dem aktuellen Bussignal entspricht.

2. Verfahren nach Anspruch 1, **dadurch gekennzeichnet, daß** das Signal Rx einer logischen ODER Verknüpfung entspricht.

3. Verfahren nach einem der Ansprüche 1 oder 2, **dadurch gekennzeichnet, daß** das.Signal Tx, welches auf den Bus gegeben wird, und das Bussignal, welches vom Steuergerät (1) eingelesen wird, verstärkt werden.

4. Verfahren nach einem der Ansprüche 1 bis 3, **dadurch gekennzeichnet, daß** die logische Verknüpfung ODER mit einem UND-Gatter (6) realisiert wird.

5. Vorrichtung zur störsicheren Übertragung von Daten in einem optischen Bus, mit einem Steuergerät, welches geeignet ist ein eine Steuergeräteinformation tragendes Signal Tx auszugeben und ein einem aktuellen Bussignal zuordenbares Signal Rx zu empfangen, mit einem elektrooptischen Wandler, welcher geeignet ist das elektrische Signal Tx in ein optisches Signal umzuwandeln, mit einem optoelektrischen Wandler, welcher geeignet ist das optische Bussignal in ein elektrisches Signal umzuwandeln, **dadurch gekennzeichnet, daß** ein Mittel (6) vorgesehen ist, welches geeignet ist ein erstes Eingangssignal und das elektrische Signal einzulesen und eine logische Verknüpfung des ersten Eingangssignals und des Bussignals als Signal Rx während der Übertragung über den Bus auszugeben.

6. Vorrichtung nach Anspruch 5, **dadurch gekennzeichnet, daß** das Mittel (6) geeignet ist eine logische Verknüpfung ODER des ersten Eingangssignals und des Bussignals als Signal Rx auszugeben.

7. Vorrichtung nach Anspruch 5 oder 6, **dadurch gekennzeichnet, daß** ein zusätzlicher Schalter (7) vorgesehen ist, mit dem das erste Eingangssignal wählbar ist.

8. Vorrichtung nach einem der Ansprüche 5 bis 7, **dadurch gekennzeichnet, daß** das erste Eingangssignal dem Signal Tx entspricht.

9. Vorrichtung nach einem der Ansprüche 5 bis 7, **dadurch gekennzeichnet, daß** das erste Eingangssignal ein konstantes Signal ist.

10. Vorrichtung nach einem der Ansprüche 5 bis 9, **dadurch gekennzeichnet, daß** das Mittel ein UND Gatter (6) ist.

11. Vorrichtung nach einem der Ansprüche 5 bis 10, **dadurch gekennzeichnet, daß** dem optoelektrischen und dem elektrooptischen Wandler jeweils ein Verstärker zugeordnet ist.

## Claims

1. Method for the interference-free transmission of data between controllers in an optical bus, in which a controller puts a signal Tx carrying a piece of controller information onto the bus and receives a signal Rx which can be associated with a current bus signal, **characterized in that** the signal Rx received during the transmission via the bus corresponds to a logic combination of the signal Tx and the current bus signal.

2. Method according to Claim 1, **characterized in that** the signal Rx corresponds to a logic OR function.

3. Method according to one of Claims 1 and 2, **characterized in that** the signal Tx which is put onto the bus and the bus signal which is read in by the controller (1) are amplified.

4. Method according to one of Claims 1 to 3, **characterized in that** the logic OR function is implemented using an AND gate (6).

5. Apparatus for the interference-free transmission of data in an optical bus, having a controller which is suitable for outputting a signal Tx carrying a piece of controller information and for receiving a signal Rx which can be associated with a current bus signal, having an electro-optical transducer which is suitable for converting the electrical signal Tx into an optical signal, having an opto-electrical transducer which is suitable for converting the optical bus signal into an electrical signal, **characterized in that** a means (6) is provided which is suitable for reading in a first input signal and the electrical signal and for outputting a logic combination of the first input signal and the bus signal as a signal Rx during the transmission via the bus.

6. Apparatus according to Claim 5, **characterized in that** the means (6) is suitable for outputting a logic OR combination of the first input signal and the bus signal as a signal Rx.

7. Apparatus according to Claim 5 or 6, **characterized in that** an additional switch (7) is provided which can be used to select the first input signal.

8. Apparatus according to one of Claims 5 to 7, **characterized in that** the first input signal corresponds to the signal Tx.

9. Apparatus according to one of Claims 5 to 7, **characterized in that** the first input signal is a constant signal.

10. Apparatus according to one of Claims 5 to 9, **characterized in that** the means is an AND gate (6).

11. Apparatus according to one of Claims 5 to 10, **characterized in that** the opto-electrical and the electro-optical transducer have a respective associated amplifier.

## Revendications

1. Procédé de transfert non perturbé de données entre des appareils de commande et un bus optique, dans lequel un appareil de commande délivre sur le bus un signal Tx qui porte une information concernant l'appareil de commande et reçoit un signal Rx qui peut être associé à un signal actuel du bus,
**caractérisé en ce que**
le signal Rx reçu pendant le transfert sur le bus correspond à un opérateur logique entre le signal Tx et le signal actuel du bus.

2. Procédé selon la revendication 1, **caractérisé en ce que** le signal Rx correspond à l'opérateur logique OU.

3. Procédé selon l'une des revendications 1 ou 2, **caractérisé en ce que** le signal Tx qui est délivré sur le bus et le signal de bus qui est lu par l'appareil de commande (1) sont amplifiés.

4. Procédé selon l'une des revendications 1 à 3, **caractérisé en ce que** l'opérateur logique OU est réalisé à l'aide d'une porte ET (6).

5. Dispositif de transfert non perturbé de données dans un bus optique, à l'aide d'un appareil de commande qui convient pour délivrer un signal Tx qui porte une information concernant l'appareil de commande et pour recevoir un signal Rx qui peut être associé à un signal actuel de bus, d'un convertisseur électro-optique qui convient pour convertir le signal électrique Tx en un signal optique et d'un convertisseur opto-électrique qui convient pour convertir le signal optique du bus en un signal électrique,
**caractérisé en ce que**
il présente un moyen (6) qui convient pour lire un premier signal d'entrée et le signal électrique et pour délivrer un opérateur logique entre le premier signal d'entrée et le signal de bus comme signal Rx pendant le transfert sur le bus.

6. Dispositif selon la revendication 5, **caractérisé en ce que** le moyen (6) convient pour délivrer comme signal Rx un opérateur logique OU entre le premier signal d'entrée et le signal de bus.

7. Dispositif selon les revendications 5 ou 6, **caractérisé en ce qu'**il présente un commutateur supplémentaire (7) par lequel le premier signal d'entrée peut être sélectionné.

8. Dispositif selon l'une des revendications 5 à 7, **caractérisé en ce que** le premier signal d'entrée correspond au signal Tx.

9. Dispositif selon l'une des revendications 5 à 7, **caractérisé en ce que** le premier signal d'entrée est un signal constant.

10. Dispositif selon l'une des revendications 5 à 9, **caractérisé en ce que** le moyen est une porte ET (6).

11. Dispositif selon l'une des revendications 5 à 10, **caractérisé en ce qu'**un amplificateur est associé au convertisseur opto-électrique et au convertisseur électro-optique.
